# EUROPEAN PATENT APPLICATION

(11) **EP 3 357 991 A1**
(43) Date of publication of application: **08.08.2018**
(21) Application number: 18152401.8
(22) Date of filing: 18.01.2018
(51) Int. Cl.: C09K 19/00, C08G 65/40, C08L 71/00, B29C 64/118

(54) **RESIN COMPOSITION FOR SOLID FREEFORM FABRICATION, METHOD OF MANUFACTURING SOLID FREEFORM FABRICATION OBJECT, AND FILAMENT FOR SOLID FREEFORM FABRICATION**

(30) Priority: 02.02.2017 JP 2017017795
(71) Applicant: Ricoh Company, Ltd., Tokyo 143-8555 (JP)
(72) Inventor: NARUSE, Mitsuru, Ohta-ku, Tokyo 143-8555 (JP)
(74) Representative: White, Duncan Rohan

(57) **Abstract**

A resin composition for solid freeform fabrication includes one or more thermoplastic resins containing a liquid crystal resin having a content rate of from 0.5 to 40 percent by mass to the one or more thermoplastic resins.

## Description

### BACKGROUND

### Technical Field

The present invention relates to a method of manufacturing a solid freeform fabrication object, a method of manufacturing a solid freeform fabrication object, and a filament for solid freeform fabrication.

### Description of the Related Art

Solid freeform fabrication technologies including laminating various materials to manufacture a solid freeform fabrication object is appealing. In comparison with the typical method of obtaining molded products utilizing a die, this technologies obviates the need for a die, which is advantageous in terms of cost-saving, in particular, for prototyping and multi-product low-volume manufacturing.

In addition, it has an advantage to manufacture a complex solid fabrication object which is beyond the ability of typical methods.

The solid freeform fabrication technologies include various methods. Of these, fused deposition modeling (FDM) requires relatively inexpensive devices and is widely applicable because objects can be fabricated using the same material as real products. The principle of the fused deposition modeling is relatively simple in comparison with other methods and is that a filament made of a thermoplastic resin is melted by heat to obtain a half-liquid resin, which is thereafter discharged through a head nozzle to a predetermined site on a fabrication stage based on 3D data, and this process is repeated to laminate layers for solid freeform fabrication.

For example, a method has been disclosed in Japanese Unexamined Patent Application Publication (Translation of PCT Application) No. 2016-518267, which includes heating a core reinforced filament having no voids containing a core and matrix materials enclosing the core to temperatures higher than the melting point of the matrix materials and lower than the melting point of the core and extruding the core reinforced filament through a nozzle to form a part.

When applying this solid freeform fabrication technologies for industrial purpose, for example, resin parts and gears around engines are required to have high temperature resistance and good strength. Therefore, thermoplastic resins containing reinforced fillers such as carbon fiber (CF) or glass fiber (GF) are used in general. To enhance strength, it is necessary to use and align long fiber of carbon fiber and glass fiber in a solid freeform fabrication object.

However, for manufacturing of a solid freeform fabrication object containing such a reinforced filler using an FDM solid freeform fabrication device, defective fabrication such as distortion occurs to the obtained solid freeform fabrication object and the strength thereof is not as much as expected.

Its causes are that flowability of melted liquid of a thermoplastic resin containing reinforced fillers is poor in comparison with that of a thermoplastic containing no reinforced fillers, the discharging amount through a head nozzle is not stable, and accumulation of reinforced filler causes clogging in a head nozzle.

In addition, one thinkable cause of being not able to obtain strength as expected is that it is not possible to align reinforced filler in the fabrication direction. A measure to solve this issue is, for example, elongation treatment during filament processing to align the reinforced filler in a filament. However, for solid freeform fabrication using a solid freeform fabrication device employing an FDM method, filament made of a thermoplastic resin is melted, which breaks alignment of the reinforced filler.

In particular, for a crystalline resin used as a thermoplastic resin, dispersability deteriorates, which degrades the issues mentioned above.

### SUMMARY

According to the present invention, provided is an improved resin composition for solid freeform fabrication, which includes one or more thermoplastic resins containing a liquid crystal resin having a content rate of from 0.5 to 40 percent by mass to the one or more thermoplastic resins.

### BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
FIG. 1 is a schematic diagram illustrating a general process of extrusion;
FIG. 2 is a schematic diagram illustrating an example of the device for manufacturing a solid freeform fabrication object; and
FIG. 3 is a schematic diagram illustrating the measuring method of the amount of warp in Examples.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

Hereinafter, the resin composition for solid freeform fabrication of the present disclosure is described for a solid freeform fabrication device employing an FDM method but the present disclosure is not limited thereto.

The resin composition for solid freeform fabrication of the present disclosure contains a thermoplastic resin, which contains a liquid crystal resin having a content rate of from 0.5 to 40 percent by mass to the thermoplastic resin.

### Liquid Crystal Resin

Liquid crystal resin (LCP) means a thermoplastic resin having a liquid crystal property in which the straight chain of the molecule is regularly arranged in melted state. The liquid crystal resin is melted like other resins by heating and maintains crystal state due to strong intermolecular force during melting, and the molecules tend to align in the direction of flowing. Therefore, the liquid crystal resin is free of entanglement of molecules during melting, so that flowability thereof is excellent.

This enhances dischargeability of the resin composition through a discharging head and stability of discharging amount thereof, enabling stable manufacturing of solid freeform fabrication objects.

Moreover, the liquid crystal resin aligns from a discharging head in the extrusion direction and tends to have a structure in which the fibers are bundled in that direction when cooled and solidified. This significantly improves strength of a solid freeform fabrication object, and also the fiber of the liquid crystal resin reduces heat contraction of the solid freeform fabrication object so that distortion such as warp can be significantly improved. Furthermore, it is possible to impart the solid freeform fabrication object excellent heat resistance and strength.

Strength of the liquid crystal resin tends to decrease in the direction vertical to the flowing direction. This defect is compensated by other thermoplastic resins, so that strength of the solid freeform fabrication object does not substantially decrease.

The crystal resin for use in the resin composition for solid freeform fabrication of the present disclosure can be selected from known crystal resins,. For example, it is possible to use type I, type II, type III, or an intermediate type thereof.
Specific examples of the liquid crystal resin for use in the present disclosure available on the market include, but are not limited to, SUMIKASUPER (manufactured by Sumitomo Chemical Company), LAPEROS® (manufactured by Polyplastics Co., Ltd.), SIVERAS® (manufactured by Toray Industries, Inc.), and Vectra® (manufactured by Celanese Corporation

In the present disclosure, the liquid crystal resin preferably includes parahydroxybenzoate as a structure unit.

In addition, in the present disclosure, the liquid crystal resin has a melting point of 220 degrees C or higher and more preferably 270 degrees C or higher. Moreover, the liquid crystal resin has a melting point of 360 degrees C or lower and particularly preferably from 279 to 340 degrees C. In addition to this range of the melting point, if at least one of the thermoplastic resins excluding the liquid crystal resin has a melting point higher than the melting point of the liquid crystal resin, the melted liquid of the resin composition for solid freeform fabrication of the present disclosure is discharged through a head nozzle during fabrication according to FDM. At the solidification temperature of the liquid crystal resin when the liquid crystal resin is cooled down, the other thermoplastic resins are still flowable so that the liquid crystal resin can be arranged in a fiber form without inhibition. Therefore, an obtained solid freeform fabrication object has good strength.

### Other Thermoplastic Resin

The resin composition for solid freeform fabrication of the present disclosure may furthermore optionally contain other thermoplastic resins excluding the liquid crystal resin mentioned above.

Examples of the other thermoplastic resin are crystalline resins and non-crystalline resins..

### Crystalline Resin

The crystalline resin contains crystals having regularly arranged molecular chains and a clear melting point. It has good mechanical strength, good chemical resistance, and a high concentration rate. The melting point can be identified by differential scanning calorimetry (DSC). In the present disclosure, it is preferable to use a crystalline resin. The kind of the crystalline resin is not particularly limited and known crystalline resins can be suitably selected. Examples are, as super engineering plastic, polyether ether ketone (PEEK), polyphenylene sulfide (PPS), and polyamides (PA9T, PA6T, and PA46).

In addition, examples of the engineering plastic for general purpose are polyamides (PA66 and PA6), polybutylene terephthalate (PBT), and polyacetal (POM), Also, examples of the resin for general purpose are polypropylene (PP), polyethylene (PE), polyvinyl acetate (EVOH), and polylactate (PLA).

Of these, to furthermore enhance the properties of the resin composition of the present disclosure, polyether ether ketone (PEEK), polyphenylene sulfide (PPS), polybutylene terephthalate (PBT) are preferable, and polyether ether ketone (PEEK) is more preferable.

### Non-crystalline Resin

The non-crystalline resin has randomly arranged molecular chains and no clear melting point. While it has good transparency, shock resistance, and molding contraction rate, chemical resistance, and fatigue resistance are poor. The non-crystalline resin for use in the present disclosure has no particular limit and known non-crystalline resins can be suitably used. Examples are, as super engineering plastic, thermoplastic polyimide (TPI), polyamide imide (PAI), polyether sulfone (PES), polyether imide (PEI), polyarylate (PAR), and polysulfone (PSF). Also, examples of the engineering plastic for general purpose are polycarbonate (PC) and modified polyphenylene ether (m-PPE). Also, examples of the resin for general purpose are acrylonitrile-butadiene-styrene (ABS), polystyrene (PS), polyvinyl chloride (PVC), and polymethylmethacrylate (PMMA).

Of these, in terms of enhancing the present disclosure, polyamide imide (PAI), polyether sulfone (PES), polyether imide (PEI), and polyarylate (PAR) are preferable.

The mass average molecular mass of the thermoplastic resin for use in the present disclosure is not particularly limited and can be appropriately selected to suit to a particular application. It is preferably from 50,000 to 1,000,000, more preferably from 75,000 to 500,000, and particularly preferably from 100,000 to 400,000. In the range specified above, discharging stability of the resin through a nozzle is improved, and quality and accuracy of an obtained solid freeform fabrication object are enhanced. The mass average molecular mass can be measured by, for example, gel permeation chromatography (GPC).

In the present disclosure, the ratio of the liquid crystal resin to the entire of thermoplastic resin is from 0.5 to 40 percent by mass. When the ratio is less than 0.5 percent by mass, it is too small to have an impact. When greater than 40 percent by mass, discharging stability deteriorates.

In the present disclosure, the content rate of the liquid crystal resin to the entire of thermoplastic resin is preferably from 1 to 20 percent by mass and more preferably from 10 to 20 percent by mass. In these preferable ranges, it is possible to enhance discharging stability through a nozzle and strength of a solid freeform fabrication object.

### Other Components

The resin composition for solid freeform fabrication of the present disclosure may furthermore optionally contain other known components in addition to the thermoplastic resins mentioned above. For example, plasticizers, fillers, stiffeners, stabilizers, dispersants, antioxidants, flame retardants, foaming agents, antistatic agents, lubricants, colorants, pigments, and various polymer modifiers are suitable. The addition of these improves filament molding stability due to fluidity improvement, dimension accuracy of filament, mechanical properties of filament, prevention of deterioration of filament, fabrication stability of a 3D printer, and quality and accuracy of an obtained solid freeform fabrication object.

### Filament for Solid Freeform Fabrication and Manufacturing Method Thereof

The resin composition for solid freeform fabrication of the present disclosure is suitably used as a filament for solid freeform fabrication for a solid freeform fabrication device employing FDM.

The filament represents, for example, an article formed by extruding a resin component for solid freeform fabrication in a string-like or thread-like form, which may be also referred to as strand.

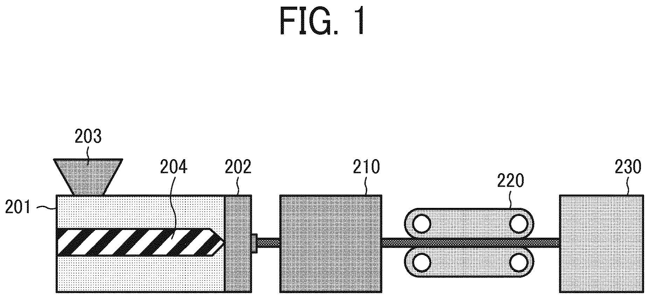

The filament for solid freeform fabrication can be manufactured according to a known extrusion method. Extrusion means a method of extruding a resin composition while melt-kneading the resin composition to continuously mold a plastic long object having a predetermined cross section form. FIG. 1 is a schematic diagram illustrating a general process of extrusion. For example, a resin composition for solid freeform fabrication containing the thermoplastic resin and the other components are loaded through a hopper 203, extruded by a screw 204 in a cylinder (also referred to as barrel) of an extruder 201 while being melt-kneaded, and caused to pass a die 202 selected to obtain a filament having a predetermined filament diameter. Thereafter, the filament is solidified by cooling down by a cooler 210, taken-up by a take-up unit 220, wound and severed by a winder and severing machine 230 to manufacture filament.

The extruder 201 generally employs screw method. The screw method includes a single screw extruder, a twin or more screw extruder, and a special extruder.

The single screw extruder includes a cylinder having a single screw mounted. For example, it is constituted of a hopper, a drive unit such as a motor, a reducer, a screw, a cylinder, a heater, a blower, a temperature controller, etc. For molding, a die is mounted onto the front of the cylinder.

The twin (multi) screw extruder includes two or more screws mounted in a cylinder. In general, two screw extruders are used, which include machines having two parallel or crossing shafts, screw flight of biting type or non-biting type, and same or different direction of screw rotation.

The special extruders are classified into three types of articles having two kinds of extruders combined in two steps, articles having a screw or barrel having a special form, or articles having no screws.

The method of met-kneading the resin composition for solid freeform fabrication of the present disclosure can be executed for each batch by using a kneader, mixer, etc., other than the extruder mentioned above.

The cooler 210 is to cool and solidify the extruded filament and determines the dimension and quality of the filament. In general, it is classified into water-cooling or air-cooling using a water tank, water shower, cooling roll, cooling board, etc.

The take-up unit 220 takes up the filament. Suitable tension and uniform tension speed with no pulsebeat are required to maintain high level of dimension accuracy and quality.

The take-up unit and the severing machine 230 roll up the filament on a bobbin, etc. and severs it.

Other than the steps mentioned above, it is possible to heat the cooled filament again for extension, which may assist in enhancing strength.

The diameter of the filament has no particular limit and can be suitably selected to suit to a particular application. For example, it is preferably from 0.5 to 10 mm and more preferably from 1.5 to 3.5 mm.

### Method of Manufacturing Solid Freeform Fabrication Object and Device for Manufacturing Solid Freeform Fabrication

The method of manufacturing a solid freeform fabrication object of the present disclosure includes melting filament made of the resin composition for solid freeform fabrication of the present disclosure and repeating laminating the melted liquid to fabricate a predetermined form. In addition, as described above, it is possible to heat and melt the filament at the melting temperature or higher of the liquid crystal resin to obtain a solid freeform fabrication object having a good strength with less distortion such as warp. The solid freeform fabrication object can be modeling material or supporting material or both.

The solid freeform fabrication device includes, for example, a device to heat and melt the resin composition for solid freeform fabrication of the present disclosure and discharge the melted resin composition to any arbitrary site according to the data input for a three dimensional shape, a device (stage) to accumulate the composition discharged, and other optional device. Specifically, a solid freeform fabrication device (3D printer) employing known fused deposition modeling (FDM®) is preferably used. Such a solid freeform fabrication device conveys the resin composition for solid freeform fabrication of the present disclosure towards a nozzle head at a predetermined speed, heats and melts the composition at the nozzle head portion, and discharges it to arbitrary sites. The discharged filament is accumulated on the stage. After this series of operations, the stage lowers and thereafter the same operations are repeated, so that the filament discharged by the nozzle head is accumulated to manufacture a solid freeform fabrication object.

It is preferable that the heating temperature of the nozzle head do not surpass the decomposition temperature of the thermoplastic resin contained in the resin composition for solid freeform fabrication of the present disclosure. Clogging in the nozzle occurs at temperatures higher than the decomposition temperature due to decomposed matter, which leads to degradation of fabrication stability.

It is possible to provide a heating device to the stage in such a manner that the filament is not peeled off during fabrication, which is suitable. The heating temperature has no particular limit and can be suitably selected to suit to a particular application unless the filament peels off during fabrication or the solid freeform fabrication object is melted and deformed on the stage. For example, the heating temperature is preferably equal to or higher than the glass transition temperature of the thermoplastic resin contained in the filament. It is also preferable to attach a sheet, sticker, etc. to the stage to enhance attachability with the filament. However, it is suitable to keep attachability to a degree that the solid freeform fabrication object is not detached during fabrication. Otherwise, if attachability is too strong, the solid freeform fabrication object may not be easily removed after fabrication.

The filament is used to directly manufacture a solid freeform fabrication object. Therefore, in general, a modeling material made of a water-insoluble thermoplastic resin is used. However, it is possible to fabricate an object using a supporting material made of a water-soluble thermoplastic resin.

The supporting material is used to support fabrication by modeling material. Therefore, a solid freeform fabrication device is normally required to have at least two heads for modeling material and for supporting material to manufacture a solid freeform fabrication object. After manufacturing a solid freeform fabrication object made of the modeling material and the supporting material, the supporting material is removed to obtain a solid freeform fabrication object made of the modeling material.

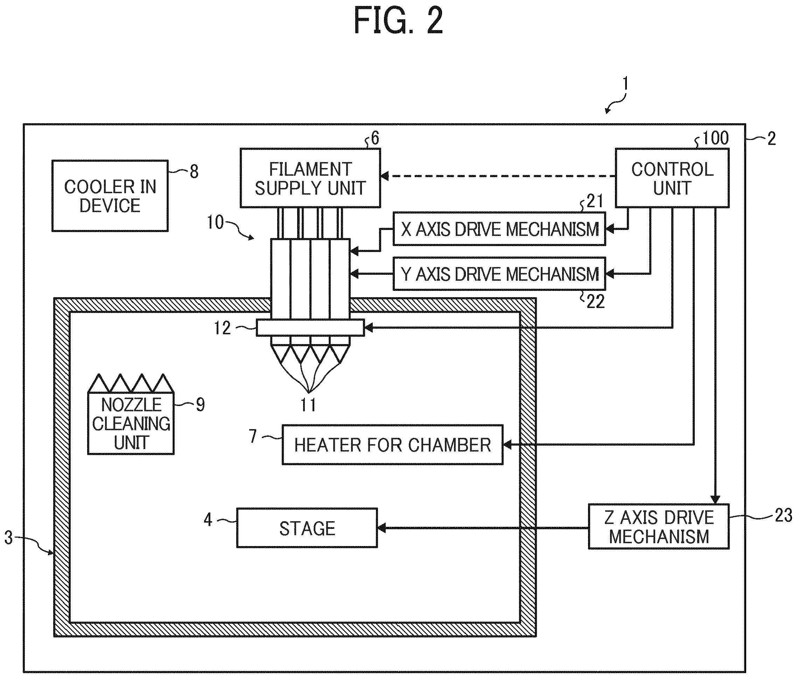

FIG. 2 is a schematic diagram illustrating an example of the device for manufacturing a solid freeform fabrication object.

A manufacturing device 1 for solid freeform fabrication object includes a chamber 3 in a frame 3. Inside the chamber 3 is a treatment space to fabricate a three-dimensional object. In this treatment space, that is, inside the chamber 3, a stage (substrate) 4 is disposed as a loading table. Solid freeform fabrication objects are fabricated on the stage 4.

A fabrication head 10 as fabrication device is disposed above the stage 4 and inside the chamber 3. On the lower part of the fabrication head 10 is disposed a discharging nozzle 11 to discharge the filament constituting the modeling material and the supporting material. Four discharging nozzles 11 are provided to the fabrication head 10 in this embodiment, but is not limiting the number of the discharging head 11 that can be provided. In addition, the fabrication head 10 includes a head heater 12 to heat the filament supplied to each discharging nozzle 11.

The filament has a long and thin wire form and is set in wound state in the manufacturing device 1. A filament supplying unit 6 supplies the filament to each discharging nozzle 11 of the fabrication head 10. The filament can be the same or different for each discharging nozzle 11. In this embodiment, the filament supplied from the filament supplying unit 6 can be heated and melted at the head heating unit 12, and a predetermined discharging nozzle 11 pushes the melted filament to discharge it through to form a layer on the stage 4. This operation is repeated to fabricate a solid freeform fabrication object.

The fabrication head 10 is carried movable in the longitudinal direction (X axis direction) to an X axis drive mechanism 21 extending from the right to left of the device via a coupling member. The fabrication head 10 can move from right to left and vice versa (X axis direction) due to the drive force of the X-axis drive mechanism 21. The fabrication head 10 is heated by the head heater 12 and becomes hot. Accordingly, the coupling member preferably has a low heat transfer property to prevent this heat from transferring to the X axis drive mechanism.

Both ends of the X-axis drive mechanism are carried slidably movable to a Y axis drive mechanism 22 along the longitudinal direction (Y axis direction) of a Y axis drive mechanism 22 extending along the front to back direction of the device. The X-axis drive mechanism 21 moves along the Y axis direction by the drive force of the Y-axis drive mechanism 22, so that the fabrication head 10 can move along the Y axis direction.

The stage 4 is fastened to the frame 2 and carried movable to a Z-axis drive mechanism 23 in the longitudinal direction of the Z-axis drive mechanism 23 extending along the up to down direction of the device. The stage 4 can move from up to down and vice versa in the device due to the drive force of the Z-axis drive mechanism 23.

In addition, a heater 7 for chamber as heater for the processing space to heat the inside (treatment space) of the chamber 3 is disposed in the inside of the chamber 3. It is preferable to maintain the temperature inside the chamber 3 at a target temperature to fabricate a solid freeform fabrication object by FDM method. Therefore, before starting fabrication, the inside of the chamber 3 is preliminarily heated to the target temperature. The heater 7 for chamber heats the inside of the chamber 3 to maintain the temperature thereof at the target temperature during this preliminary heating. A control unit 100 controls the behavior of the heater 7 for chamber.

The chamber 3 is formed of a heat insulation material or a member to which a heat insulation material is provided to prevent the heat inside the chamber 3 from escaping outside. In particular, the X-axis drive mechanism 21, the Y-axis drive mechanism 22, and the Z-axis drive mechanism 23 are disposed outside the chamber 3. Therefore, the X-axis drive mechanism 21, the Y-axis drive mechanism 22, and the Z-axis drive mechanism 23 are not exposed to the high temperature in the chamber 3, so that their stable drive control is secured.

There are disposed a cooler 8 in the device outside the chamber 3 to cool down the space inside the manufacturing device 1 and a nozzle cleaner 9 to clean the discharging nozzle 11 of the fabrication head 10.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, the present disclosure is described in detail with reference to Examples and Comparative Examples but not limited thereto.

### Manufacturing of Filament

### Example 1

99.5 percent by mass polyether ether ketone (381G, melting point of 343 degrees C, manufactured by Victrex plc) and 0.5 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a filament 1 having a diameter of 1.75 mm.

### Example 2

99.0 percent by mass polyether ether ketone (381G, melting point of 343 degrees C, manufactured by Victrex plc) and 1.0 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a filament 2 having a diameter of 1.75 mm.

### Example 3

90.0 percent by mass polyether ether ketone (381G, melting point of 343 degrees C, manufactured by Victrex plc) and 10.0 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a filament 3 having a diameter of 1.75 mm.

### Example 4

80.0 percent by mass polyether ether ketone (381G, melting point of 343 degrees C, manufactured by Victrex plc) and 20.0 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a filament 4 having a diameter of 1.75 mm.

### Example 5

60.0 percent by mass polyether ether ketone (381G, melting point of 343 degrees C, manufactured by Victrex plc) and 40.0 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a filament 5 having a diameter of 1.75 mm.

### Example 6

99.5 percent by mass polyether ether ketone (381G, melting point of 343 degrees C, manufactured by Victrex plc) and 0.5 percent by mass liquid crystal resin (UENOLCO A-8000, melting point of 220 degrees C, manufactured by UENO FINE CHEMICALS INDUSTRY LTD.) were subjected to melting and kneading and filament molding using the extruder illustrated in FIG. 1 to manufacture a filament 6 having a diameter of 1.75 mm.

### Example 7

90.0 percent by mass polyether ether ketone (381G, melting point of 343 degrees C, manufactured by Victrex plc) and 10.0 percent by mass liquid crystal resin (UENOLCO A-8000, melting point of 220 degrees C, manufactured by UENO FINE CHEMICALS INDUSTRY LTD.) were subjected to melting and kneading and filament molding using the extruder illustrated in FIG. 1 to manufacture a filament 7 having a diameter of 1.75 mm.

### Example 8

90.0 percent by mass polyether ether ketone (381G, melting point of 343 degrees C, manufactured by Victrex plc) and 10.0 percent by mass liquid crystal resin (UENOLCO A-5000, melting point of 279 degrees C, manufactured by UENO FINE CHEMICALS INDUSTRY LTD.) were subjected to melting and kneading and filament molding using the extruder illustrated in FIG. 1 to manufacture a filament 8 having a diameter of 1.75 mm.

### Example 9

90.0 percent by mass polyether ether ketone (381G, melting point of 343 degrees C, manufactured by Victrex plc) and 10.0 percent by mass liquid crystal resin (UENOLCO A-6000, melting point of 323 degrees C, manufactured by UENO FINE CHEMICALS INDUSTRY LTD.) were subjected to melting and kneading and filament molding using the extruder illustrated in FIG. 1 to manufacture a filament 9 having a diameter of 1.75 mm.

### Example 10

90.0 percent by mass polyether ether ketone (381G, melting point of 343 degrees C, manufactured by Victrex plc) and 10.0 percent by mass liquid crystal resin (UENOLCO A-3000, melting point of 340 degrees C, manufactured by UENO FINE CHEMICALS INDUSTRY LTD.) were subjected to melting and kneading and filament molding using the extruder illustrated in FIG. 1 to manufacture a filament 10 having a diameter of 1.75 mm.

### Example 11

90.0 percent by mass polyphenylene sulfide (E1308, melting point of 278 degrees C, manufactured by Toray Industries, Inc.) and 10.0 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a filament 11 having a diameter of 1.75 mm.

### Example 12

90.0 percent by mass polyetherimide (1000, manufactured by Saudi Basic Industries Corporation (SABIC)) and 10.0 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a filament 12 having a diameter of 1.75 mm.

### Example 13

90.0 percent by mass polyethersulfone (4100, manufactured by Sumitomo Chemical Company) and 10.0 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a filament 13 having a diameter of 1.75 mm.

### Comparative Example 1

100.0 percent by mass polyether ether ketone (381G, melting point of 343 degrees C, manufactured by Victrex plc) was subjected to melting and kneading and filament molding using the extruder illustrated in FIG. 1 to manufacture a comparative filament 1 having a diameter of 1.75 mm.

### Comparative Example 2

99.9 percent by mass polyether ether ketone (381G, melting point of 343 degrees C, manufactured by Victrex plc) and 0.1 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a comparative filament 2 having a diameter of 1.75 mm.

### Comparative Example 3

50.0 percent by mass polyether ether ketone (381G,melting point of 343 degrees C, manufactured by Victrex plc) and 50.0 percent by mass liquid crystal resin (UENOLCO A-2000, melting point of 334 degrees C, manufactured by UENO FINE CHEMICALS INDUSTRY LTD.) were subjected to melting and kneading and filament molding using the extruder illustrated in FIG. 1 to manufacture a comparative filament 3 having a diameter of 1.75 mm.

### Comparative Example 4

66.7 parts by mass polyether ether ketone (381G, melting point of 343 degrees C, manufactured by Victrex plc) and 33.3 parts by mass polyether ether ketone containing 30 percent CF (450CA30, manufactured by Victrex plc) were subjected to melting and kneading and filament molding using the extruder illustrated in FIG. 1 to manufacture a comparative filament 4 having a diameter of 1.75 mm.

### Comparative Example 5

100.0 percent by mass polyphenylene sulfide (E1308, melting point of 278 degrees C, manufactured by Toray Industries, Inc.) was subjected to melting and kneading and filament molding using the extruder illustrated in FIG. 1 to manufacture a filament 5 having a diameter of 1.75 mm.

### Comparative Example 6

100.0 percent by mass polyetherimide (1000, manufactured by Saudi Basic Industries Corporation (SABIC)) was subjected to melting and kneading and filament molding using the extruder illustrated in FIG. 1 to manufacture a comparative filament 6 having a diameter of 1.75 mm.

### Comparative Example 7

100.0 percent by mass polyethersulfone (4100, manufactured by Sumitomo Chemical Company) was subjected to melting and kneading and filament molding using the extruder illustrated in FIG. 1 to manufacture a comparative filament 7 having a diameter of 1.75 mm.

### Manufacturing of Solid Freeform Fabrication Object

A test piece of solid freeform fabrication having a dimension of 165 mm (X axis) x 13 mm (Y axis) x 3 mm (Z axis) was manufactured using the manufacturing device as illustrated in FIG. 2 and each filament of Examples and Comparative Examples. The temperature of the discharging nozzle was set to 380 degrees C for PEEK as main resin, 330 degrees C for PPS as main resin, 380 degrees C for PEI as main resin, and 360 degrees C for PES as main resin. The fabrication speed was 60 mm/sec.

### Evaluation

### Discharging Stability

Discharging of the filament through the discharging nozzle of the manufacturing device during manufacturing the solid freeform fabrication object was visually observed to evaluate discharging stability according to the following evaluation criteria:

### Evaluation Criteria

S: No defective discharging but stable discharging was observed
A: Discharging amount varied in the middle of fabrication but fabrication was possible
B: Defective discharging frequently occurred and fabrication was impossible
C: Impossible to discharge

### Amount of Warp

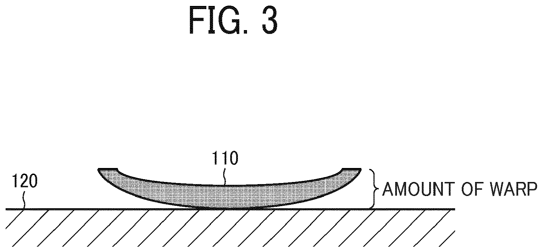

As illustrated in FIG. 3, the manufactured test piece 110 was placed still on a horizontal surface 120, and the maximum distance (amount of warp) from the horizontal surface in the Z-axis direction was measured by a scale to evaluate the amount of warp according to the following evaluation criteria:

### Evaluation Criteria

S: Amount of warp of the fabrication object was 0.5 mm or less from horizontal surface
A: Amount of warp of the fabrication object was from greater than 0.5 to 1.0 mm
B: Amount of warp of the fabrication object was greater than 1.0 mm
C: Test piece significantly warped and fabrication was impossible

### Strength

The yield strength of each test piece was measured by a tension tester (Autograph AGS-X, manufactured by Shimadzu Corporation) in condition of a speed of 5 mm/s and a distance between chucks of 100 mm to evaluate strength according to the following evaluation criteria.

### Evaluation Criteria

A: Not less than 150 MPa
B: 100 MPa to less than 150 MPa
C: Less than 100 MPa

The results are shown in Table 1.

**Table 1**

| Example | Thermoplastic resin used and rate (percent by mass) | | Melting point (degrees C) of LCP | Evaluation Result | | |
|---|---|---|---|---|---|---|
| | | | | Discharging stability | Amount of warp | Yield strength |
| Example 1 | Crystalline resin PEEK (99.5 percent) | LCP (0.5 percent) | 334 | A | A | B |
| Example 2 | Crystalline resin PEEK (99.0 percent) | LCP (1.0 percent) | 334 | S | S | B |
| Example 3 | Crystalline resin PEEK (90.0 percent) | LCP (10.0 percent) | 334 | S | S | A |
| Example 4 | Crystalline resin PEEK (80.0 percent) | LCP (20.0 percent) | 334 | S | S | A |
| Example 5 | Crystalline resin PEEK (60.0 percent) | LCP (40.0 percent) | 334 | A | S | A |
| Example 6 | Crystalline resin PEEK (99.5 percent) | LCP (0.5 percent) | 220 | A | A | B |
| Example 7 | Crystalline resin PEEK (90.0 percent) | LCP (10.0 percent) | 220 | S | S | B |
| Example 8 | Crystalline resin PEEK (90.0 percent) | LCP (10.0 percent) | 279 | S | S | A |
| Example 9 | Crystalline resin PEEK (90.0 percent) | LCP (10.0 percent) | 323 | S | S | A |
| Example 10 | Crystalline resin PEEK (90.0 percent) | LCP (10.0 percent) | 340 | S | S | A |
| Example 11 | Crystalline resin PPS (90.0 percent) | LCP (10.0 percent) | 334 | S | S | B |
| Example 12 | Non-crystalline resin PEI (90.0 percent) | LCP (10.0 percent) | 334 | S | S | B |
| Example 13 | Non-crystalline resin PES (90.0 percent) | LCP (10.0 percent) | 334 | S | S | B |
| Comparative Example 1 | Crystalline resin PEEK (100 percent) | - | - | A | B | C |
| Comparative Example 2 | Crystalline resin PEEK (99.9 percent) | LCP (0.1 percent) | 334 | A | B | C |
| Comparative Example 3 | Crystalline resin PEEK (50.0 percent) | LCP (50.0 percent) | 334 | C | - | - |
| Comparative Example 4 | Crystalline resin PEEK (90.0 percent) | CF (10.0 percent) | 334 | B | A | B |
| Comparative Example 5 | Crystalline resin PPS (100.0 percent) | - | - | A | B | C |
| Comparative Example 6 | Non-crystalline resin PEI (100.0 percent) | - | - | A | A | C |
| Comparative Example 7 | Non-crystalline resin PES (100.0 percent) | - | - | A | A | C |

As seen in the results shown in Table 1, the resin composition for solid freeform fabrication of each Example contains the liquid crystal resin and the ratio of the liquid crystal resin in the thermoplastic resin is from 0.5 to 40 percent by mass. Therefore, strength of each Example is higher than that of each Comparative Example, the amount of warp of each Example is less than that of each Comparative Example, and discharging stability of each Example is better than that of each Comparative Example.

According to the present disclosure, a resin composition for solid freeform fabrication is provided which has a good discharging stability and with which a solid freeform fabrication object having a good strength with less distortion such as warp can be obtained even when the thermoplastic resin containing no reinforced filler such as carbon fiber and glass fiber is used.

Having now fully described embodiments of the present invention, it will be apparent to one of ordinary skill in the art that many changes and modifications can be made thereto without departing from the spirit and scope of embodiments of the invention as set forth herein.

## Claims

1. A resin composition for solid freeform fabrication, comprising:
one or more thermoplastic resins comprising a liquid crystal resin having a content rate of from 0.5 to 40 percent by mass to the one or more thermoplastic resins.

2. The resin composition according to claim 1, wherein the content rate of the liquid crystal resin is from 1 to 20 percent by mass.

3. The resin composition according to claim 1 or 2, wherein the liquid crystal resin has a melting point of 270 degrees C or higher.

4. The resin composition according to any one of claims 1 to 3 , wherein the one or more thermoplastic resins further comprises a crystalline resin.

5. The resin composition according to claim 4, wherein the crystalline resin comprises a polyether ether ketone.

6. The resin composition according to according to any one of claims 1 to 5, wherein at least one of the one or more thermoplastic resins excluding the liquid crystal resin has a melting point higher than that of the liquid crystal resin.

7. The resin composition according to any one of claims 1 to 6, comprising no filler.

8. A method of manufacturing a solid freeform fabrication object comprising:
melting the resin composition of according to any one of claims 1 to 6 to obtain melted matter thereof and;
laminating the melted matter to fabricate the solid freeform fabrication object having a particular form.

9. A filament for solid freeform fabrication comprising the resin composition of any one of claims 1 to 6.

10. A resin composition for solid freeform fabrication, comprising:
a thermoplastic resin comprising a liquid crystal resin,
wherein a test piece having a dimension of 165 mm along X axis, 13 mm along Y axis, and 3 mm along Z axis prepared using the resin composition has an amount of warp and a yield strength satisfying the following 1 and 2,
1. the test piece disposed on a horizontal surface has a maximum amount of warp along Z axis from the horizontal surface of 1.0 mm or less, and
2. the test piece has a yield strength of 100 MPa or greater as measured by a tension tester in a condition of a velocity of 5 mm/s and a distance between chucks of 100 mm.

11. The resin composition according to claim 10, further comprising one or more crystalline resins.

12. The resin composition according to claim 11, wherein at least one of the one or more crystalline resins has a melting point higher than that of the liquid crystal resin.

13. The resin composition according to any one of claims 10 to 12, comprising no filler.

14. A method of manufacturing a solid freeform fabrication object comprising:
melting the resin composition of any one of claims 10 to 12 to obtain melted matter thereof and;
laminating the melted matter to fabricate the solid freeform fabrication object having a particular form.

15. A filament for solid freeform fabrication comprising the resin composition of any one of claims 10 to 12.
